# EUROPEAN PATENT APPLICATION

(11) **EP 2 713 317 A1**
(43) Date of publication of application: **02.04.2014**
(21) Application number: 12860702.5
(22) Date of filing: 10.12.2012
(51) Int. Cl.: G06K 19/077

(54) **SECURE DIGITAL CARD CAPABLE OF TRANSMITTING DATA THROUGH WIRELESS NETWORKS**

(30) Priority: 19.12.2011 CN 201110427320
(71) Applicant: Huawei Device Co., Ltd., Longgang District Shenzhen Guangdong 518129 (CN)
(72) Inventor: JIN, Lei, Shenzhen Guangdong 518129 (CN); GAO, Chunyu, Shenzhen Guangdong 518129 (CN)
(74) Representative: Goddar, Heinz J.
(86) International application number: PCT/CN2012/086258
(87) International publication number: WO 2013/091489

(57) **Abstract**

The present invention provides an SD card, including: an SDIO interface, a selector switch, a storage unit, a baseband processing unit, a radio frequency circuit, and an antenna. The SDIO interface is configured to provide a data and control interface between a host device and the storage unit. The storage unit is configured to store data. The selector switch includes a first branch and a second branch, and when the selector switch connects to the first branch, a read/write interface of the storage unit is coupled to the SDIO interface, and when the selector switch connects to the second branch, the read/write interface of the storage unit is coupled to the baseband processor. The baseband processor is coupled to the radio frequency circuit, and is configured to process baseband data. The radio frequency circuit is coupled to the baseband processor. The antenna is configured to send a radio frequency signal output by the radio frequency circuit, and receive a radio frequency signal from a network.

## Description

This application claims priority to Chinese Patent Application No. 201110427320.1, filed with the Chinese Patent Office on December 19, 2011, which is herein incorporated by reference in its entirety.

### FIELD OF THE INVENTION

The present invention relates to the field of communication technologies, and in particular, to a secure digital card capable of transmitting data over a wireless network.

### BACKGROUND OF THE INVENTION

At present, wireless networks become more and more developed, for demands from people for accessing the Internet anywhere and anytime, various electronic devices, such as a notebook computer, a tablet PC, and a digital camera, are required to support a wireless network connection such as 3G (3^{rd} Generation, 3^{rd} generation mobile communication technology), LTE (Long Term Evolution, long term evolution), and WiFi (Wireless Fidelity, wireless fidelity). However, in the prior art, these devices usually do not have a function of connecting to a wireless network. In order to enable these devices to transmit data over a wireless network, a dedicated wireless network module needs to be added on these devices, which increases the cost and also does not have universality.

### SUMMARY OF THE INVENTION

An embodiment of the present invention provides a secure digital card capable of transmitting data over a wireless network, which can implement that an electronic device transmits data over the wireless network in a case that the electronic device is not reconstructed, so that the cost is saved and universality is improved.

The secure digital card includes: a secure digital input and output (Secure Digital Input and Output, SDIO) interface 101, a selector switch 102, a storage unit 103, a baseband processing unit 104, a radio frequency circuit 105, and an antenna 106. The SDIO interface 101 is configured to provide a data and control interface between a host device 200 and the storage unit 103. The storage unit 103 is configured to store data. The selector switch includes a first branch and a second branch. When the selector switch connects to the first branch, a read/write interface of the storage unit 103 is coupled to the SDIO interface 101, and when the selector switch connects to the second branch, the read/write interface of the storage unit 103 is coupled to the baseband processor 104. The baseband processor 104 is coupled to the radio frequency circuit 105, and is configured to process baseband data. The radio frequency circuit 105 is coupled to the baseband processor 104, and is configured to convert data output by the baseband processor 104 into a radio frequency signal and send the radio frequency signal to the antenna 106, and convert a radio frequency signal from the antenna 106 into a digital signal and send the digital signal to the baseband processor 104. The antenna 106 is configured to send a radio frequency signal output by the radio frequency circuit, and receive a radio frequency signal from a network.

For the SD card provided by the embodiment of the present invention, an Internet access function can be implemented on the SD card, which requires no reconstruction of the host device, so that the cost of a user is saved and the universality is improved.

### BRIEF DESCRIPTION OF THE DRAWINGS

FIG. 1 is a schematic structural diagram of an SD card according to an embodiment of the present invention;
FIG. 2 is a schematic structural diagram of a radio frequency circuit according to an embodiment of the present invention;
FIG. 3A is a schematic structural diagram of an SD card according to another embodiment of the present invention;
FIG. 3B is a schematic structural diagram of an SD card according to another embodiment of the present invention;
FIG. 4 is a schematic structural diagram of an SD card with a switch controller according to an embodiment of the present invention;
FIG. 5 is a schematic structural diagram of a switch controller according to an embodiment of the present invention;
FIG. 6 is a schematic structural diagram of a switch controller according to another embodiment of the present invention; and
FIG. 7 is a schematic structural diagram of a selector switch with a state output end
according to an embodiment of the present invention.

### DETAILED DESCRIPTION OF THE EMBODIMENTS

Specific implementation manners of the present invention are described in detail with reference to accompanying drawings in the following. First, words and terms used in the following various embodiments are explained.

A host device (host device) refers to a secure digital interface master device, and may be various electronic devices, which include, but are not limited to: a notebook computer (Notebook Computer), a mobile phone, a personal digital assistant (Personal Digital Assistant, PDA), a tablet PC (Tablet PC), a digital camera, a digital video camera, and an MP3/MP4 player.

When it is mentioned that A is "coupled" to B in the following embodiments, it indicates that an electrical signal passing through A is physically associated with an electrical signal passing through B, which includes that A and B are directly connected through a wire or indirectly connected via another component C, and also includes that respective electrical signals passing through A and B are associated through electromagnetic induction like a transformer.

When ordinal numbers such as "first" and "second" are mentioned in the present invention, unless order is indeed denoted in the context, it should be understood that the ordinal numbers are just for the purpose of distinguishing.

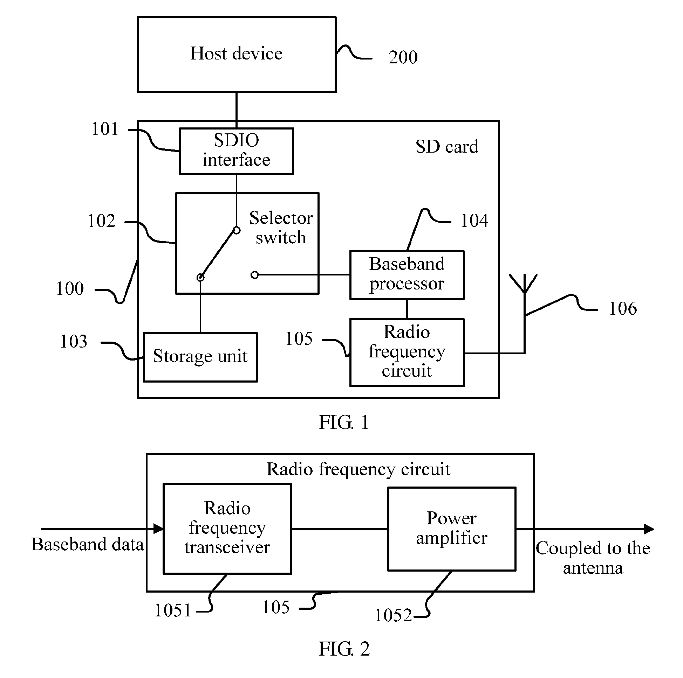

As shown in FIG. 1, in an embodiment of the present invention, a secure digital (Secure Digital, SD) card 100 includes: a secure digital input and output (Secure Digital Input and Output, SDIO) interface 101, a selector switch 102, a storage unit 103, a baseband processing unit 104, a radio frequency circuit 105, and an antenna 106. The SDIO interface 101 is configured to provide a data and control interface between a host device 200 and the storage unit 103. The storage unit 103 is configured to store data. The selector switch includes a first branch and a second branch. When the selector switch connects to the first branch, a read/write interface of the storage unit 103 is coupled to the SDIO interface 101, and when the selector switch connects to the second branch, the read/write interface of the storage unit 103 is coupled to the baseband processor 104. The baseband processor 104 is coupled to the radio frequency circuit 105, and is configured to process baseband data. The radio frequency circuit 105 is coupled to the baseband processor 104, and is configured to convert data output by the baseband processor 104 into a radio frequency signal and send the radio frequency signal to the antenna 106, and convert a radio frequency signal from the antenna 106 into a digital signal and send the digital signal to the baseband processor 104. The antenna 106 is configured to send a radio frequency signal output by the radio frequency circuit, and receive a radio frequency signal from a network.

For the SD card provided by the embodiment of the present invention, an Internet access function can be implemented on the SD card, which requires no reconstruction of the host device, so that the cost of a user is saved and universality is improved.

The baseband processor 104 may be a base processor of a cellular network, for example, a cellular network system, such as global system for mobile communications (GSM), code division multiple access (CDMA), wideband code division multiple access (WCDMA), and LTE, which is not limited in the present invention.

As shown in FIG. 2, the radio frequency circuit 105 usually includes a radio frequency transceiver (Radio frequency Transceiver) 1051, and a function of the component is to modulate a digital signal into a radio frequency signal and demodulate a received radio frequency signal into a digital signal. The radio frequency circuit 105 may usually further include a power amplifier 1052, which is configured to amplify a radio frequency signal output by the radio frequency transceiver 1051, and an output end of the power amplifier 1052 is coupled to the antenna 106.

In order to adapt to the size of the SD card, the antenna 106 may specifically be a printed antenna, which is not limited in the embodiment of the present invention, and may also be any other antennas known by persons skilled in the art.

The selector switch 102 may be an electronic switch, and there are mature products of this type of components in the prior art, which is not limited in the embodiments of the present invention.

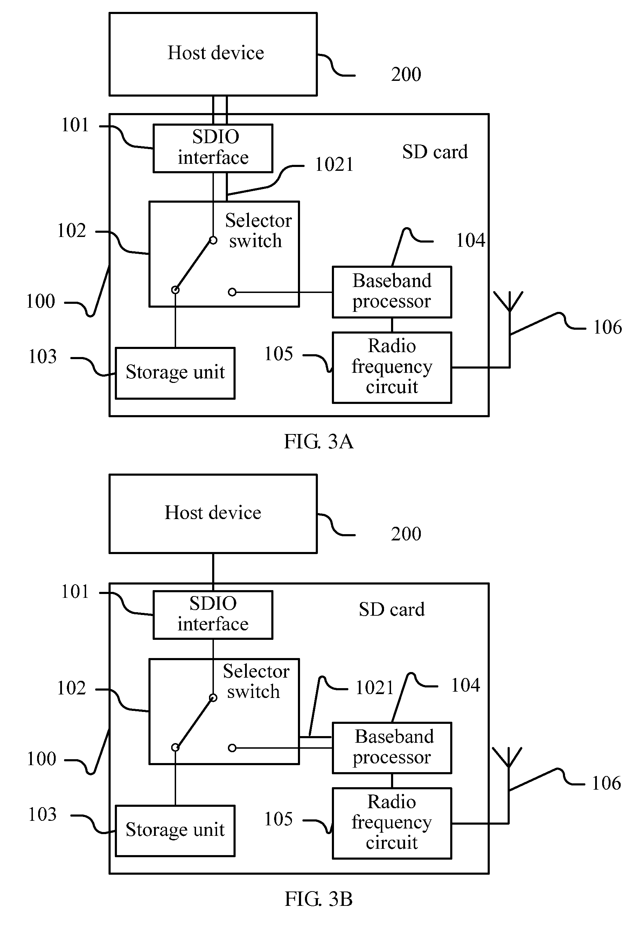

As shown in FIG. 3A and FIG. 3B, in an embodiment of the present invention, the selector switch 102 has a control input end 1021. The control input end 1021 is configured to receive a switch control signal, and the switch control signal is used to control the selector switch 102 to switch between the first branch and the second branch.

The switch control signal may be generated by the host device 200. For example, the host device 200 receives an instruction from the user, and outputs the switch control signal to the control input end of the selector switch through the SDIO interface 101, that is to say, in this case (as shown in FIG. 3A), the control input end 1021 is coupled to the SDIO interface 101. Certainly, the host device 200 may also automatically generate the switch control signal through a program.

The switch control signal may also be generated by the baseband processor 104. For example, the baseband processor 104 outputs, through its general purpose input and output (General Purpose Input and Output, GPIO) interface, the switch control signal to the control input end 1021, that is to say, in this case (as shown in FIG. 3B), the baseband processor 104 is coupled to the input control end 1021. The baseband processor 104 may generate the switch control signal through a program.

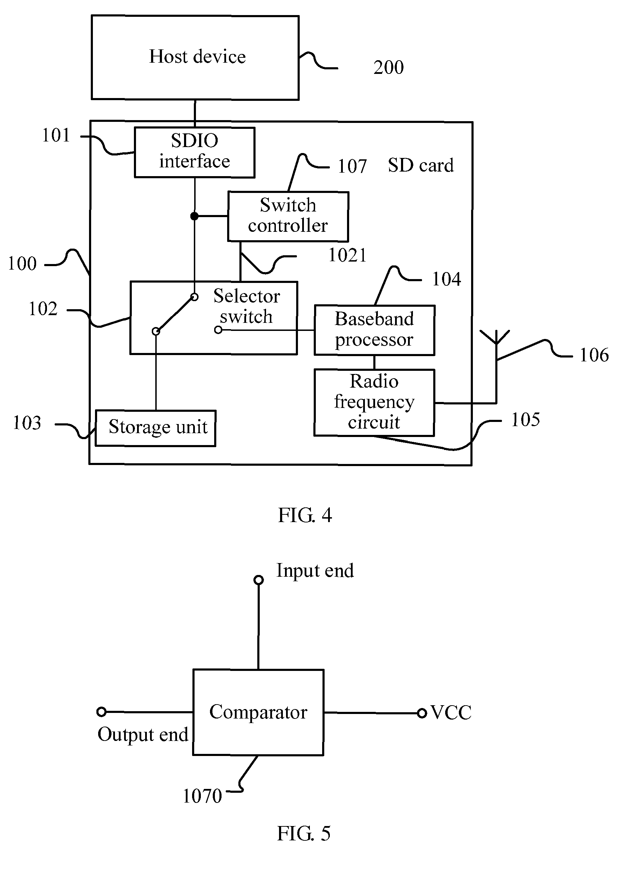

As shown in FIG. 4, in an embodiment of the present invention, the selector switch 102 may be controlled to switch between the first branch and the second branch through a switch controller 107. The switch controller is coupled to the SDIO interface 101 and the control input end 1021 separately, and is configured to control the selector switch 102 to connect to the first branch when there is a signal transmitted on the SDIO interface 101. Usually, when there is a signal transmitted on the SDIO interface 101, it indicates that currently the host device 200 is trying to read from or write to the storage unit 103, and in this case, it is required to enable the selector switch to connect to the first branch. Optionally, the switch controller 107 is further configured to control the selector switch 102 to connect to the second branch when the SDIO interface is in an idle state. When the SDIO interface is idle, the host device 200 does not read from and write to the storage unit 103, and in this case, the baseband processor 104 may read data from the storage unit 103 and send the data over the wireless network. Certainly, when the SDIO interface is idle, the selector switch 102 does not have to connect to the second branch, and may further control the switch controller 107 to output the switch control signal through a control signal from the host device 200 or the baseband processor 104. For example, when the SDIO interface 101 is idle and only when a switch instruction from the host device 200 or the baseband processor 104 is received, does the switch controller 107 control the selector switch 102 to connect to the second branch.

The switch controller 107 may have multiple implementation manners. For example, the switch controller 107 may be a comparator. As shown in FIG. 5, an input end of the comparator 1070 is coupled to the SDIO interface 101, and an output end is coupled to the control input end 1021. The comparator 1070 compares a level on its input end with a reference level VCC, and outputs the switch control signal according to a comparison result. When there is a signal transmitted on the SDIO interface 101, a level on the SDIO interface 101 changes, and the reference level VCC may be set to a level when the SDIO interface 101 is idle, or set to a certain level between a level when the SDIO interface 101 is idle and a level when a signal is transmitted. In this way, when the level on the SDIO interface 101 changes, the comparator 1070 outputs the switch control signal according to the comparison result. For example, the reference level VCC is set to the level when the SDIO interface 101 is idle. When it has been detected by the comparator 1070 that the level on the SDIO interface 101 is higher than the reference level VCC, the selector switch 102 is controlled to connect to the first branch. When it has been detected by the comparator 1070 that the level on the SDIO interface 101 is lower than the reference level VCC, the selector switch 102 is controlled to connect to the second branch. Certainly, persons skilled in the art know that, the comparator 1070 may also be designed to, when the level on the SDIO interface 101 is lower than the reference level VCC, control the selector switch 102 to connect to the first branch, and when the level on the SDIO interface 101 is higher than the reference level VCC, control the selector switch 102 to connect to the second branch.

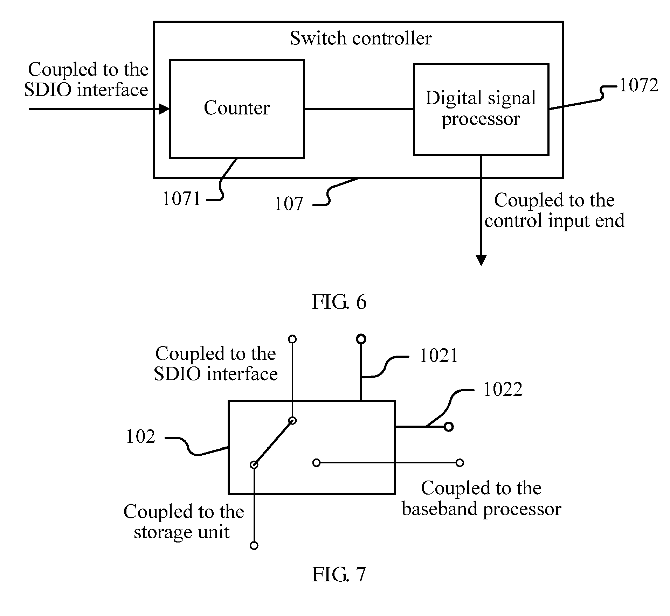

Another implementation manner is to implement output of the switch control signal through a digital signal processor (Digital Signal Processor, DSP). As shown in FIG. 6, in an embodiment, the switch controller 107 includes a counter 1071 and a digital signal processor 1072. An input end of the counter 1071 is coupled to the SDIO interface 101, and an output end of the counter 1071 is coupled to the digital signal processor 1072. The counter 1071 is configured to count signals transmitted on the SDIO interface 101. The digital signal processor 1072 is coupled to the control input end 1021, and is configured to read a count value output by the counter 1071 and output the switch control signal according to the count value. Specifically, the digital signal processor 1072 may periodically read the count value, and determine whether the count value is increasing. If the count value is increasing, it means that there is a signal transmitted on the SDIO, and in this case, the digital signal processor 1072 outputs the switch control signal to control the selector switch 102 to connect to the first branch. If the count value is not increasing, it means that there is no signal transmitted on the SDIO interface, and in this case, the digital signal processor may output the switch control signal to control the selector switch 102 to connect to the second branch.

The switch control signal may have multiple forms. In some embodiments, the switch control signal includes a first branch connection signal and a second branch connection signal, where the first branch connection signal controls the selector switch 102 to connect to the first branch, and the second branch connection signal controls the selector switch 102 to connect to the second branch. In these embodiments, a component responsible for outputting the switch control signal outputs the first branch connection signal when controlling the selector switch 102 to connect to the first branch, and outputs the second branch connection signal when controlling the selector switch 102 to connect to the second branch. When the component responsible for outputting the switch control signal controls the selector switch 102 to connect to the first branch and controls the selector switch 102 to connect to the second branch is described in the foregoing embodiments, and is not repeatedly described here.

In some other embodiments, the switch control signal is specifically a state switch signal, and the state switch signal is used for controlling the selector switch 102 to switch from a currently connected branch to the other branch. For example, the selector switch 102 currently connects to the first branch, and when the selector switch 102 receives the state switch signal, the selector switch 102 switches from connecting to the first branch to connecting to the second branch. If the selector switch 102 currently connects to the second branch, and when the selector switch 102 receives the state switch signal, the selector switch 102 switches from connecting to the second branch to connecting to the first branch. In these embodiments, when outputting the state switch signal, a component responsible for outputting the switch control signal is required to know which branch the selector switch currently connects to. As shown in the figure, a state output end 1022 may be added on the selector switch 102 for implementation. The component responsible for outputting the state switch signal reads, through the state output end 1022, a state about which branch the selector switch 102 currently connects to, so as to decide to output the state switch signal.

The selector switch 102 and the switch controller 102 may be separate components, and may also be integrated on one chip, and specifically may be integrated in a field programmable gate array (Field Programmable Gate Array, FPGA).

In addition, the foregoing technologies, systems, apparatuses, methods in the foregoing embodiments and technical features described in the embodiments may be combined, so as to form other modules, methods, apparatuses, systems and technologies without departing from the spirit and principle of the present invention. The combined modules, methods, apparatuses, systems, and technologies according to the record of the present invention should all fall within the protection scope of the present invention.

Obviously, persons skilled in the art should understand that, the foregoing units or steps of the present invention may be implemented by a general-purpose computing apparatus, and may be integrated on a single computing apparatus or be distributed on a network formed of multiple computing apparatuses. Optionally, the foregoing units or steps may be implemented through program codes which may be executed by the computing apparatus, so that the program codes may be stored in a storage apparatus and executed by the computing apparatus, or the foregoing units or steps may be made into various circuit modules, or multiple units or steps of the foregoing units or steps may be made into a single circuit module for implementation. The present invention is not limited to any specific combination of hardware and software.

The foregoing is merely exemplary embodiments of the present invention, but not intended to limit the protection scope of the present invention. Any modification, equivalent replacement, and improvement made within the spirit and principle of the present invention shall all fall within the protection scope of the present invention.

## Claims

1. A secure digital SD card, comprising:
a secure digital input and output SDIO interface, a selector switch, a storage unit, a baseband processing unit, a radio frequency circuit, and an antenna; wherein
the SDIO interface is configured to provide a data and control interface between a host device and the storage unit;
the storage unit is configured to store data;
the selector switch comprises a first branch and a second branch, and when the selector switch connects to the first branch, a read/write interface of the storage unit is coupled to the SDIO interface, and when the selector switch connects to the second branch, the read/write interface of the storage unit 103 is coupled to the baseband processor;
the baseband processor is coupled to the radio frequency circuit, and is configured to process baseband data;
the radio frequency circuit is coupled to the baseband processor, and is configured to convert data output by the baseband processor into a radio frequency signal and send the radio frequency signal to the antenna, and convert a radio frequency signal from the antenna into a digital signal and send the digital signal to the baseband processor; and
the antenna is configured to send a radio frequency signal output by the radio frequency circuit, and receive a radio frequency signal from a network.

2. The SD card according to claim 1, wherein the selector switch comprises a control input end, the control input end is configured to receive a switch control signal, and the switch control signal is used for controlling the selector switch 102 to switch between the first branch and the second branch.

3. The SD card according to claim 2, wherein the SD card further comprises a switch controller, and the switch controller is coupled to the SDIO interface and the control input end separately, and is configured to control the selector switch to connect to the first branch when there is a signal transmitted on the SDIO interface.

4. The SD card according to claim 3, wherein the switch controller is further configured to control the selector switch to connect to the second branch when the SDIO interface is idle.

5. The SD card according to claim 4, wherein the control switcher is further coupled to the baseband processor, and the switch controller is further configured to control the selector switch to connect to the second branch when the SDIO interface is idle and a switch instruction from the baseband processor is received.

6. The SD card according to claim 4, wherein the switch controller is further configured to control the selector switch to connect to the second branch when the SDIO interface is idle and a switch instruction from the host device is received.

7. The SD card according to any one of claims 3 to 6, wherein
the switch control is specifically a comparator, an input end of the comparator is coupled to the SDIO interface, and an output end of the comparator is coupled to the control input end; and
the comparator is configured to control the selector switch to connect to the first branch when it has been detected that a level on the SDIO interface is higher than a reference level of the comparator.

8. The SD card according to any one of claims 3 to 6, wherein
the switch control is specifically a comparator, an input end of the comparator is coupled to the SDIO interface, and an output end of the comparator is coupled to the control input end; and
the comparator is configured to control the selector switch to connect to the first branch when it has been detected that a level on the SDIO interface is lower than a reference level of the comparator.

9. The SD card according to claim 7, wherein the comparator is further configured to control the selector switch to connect to the second branch when it has been detected that the level on the interface is lower than the reference level.

10. The SD card according to claim 8, wherein the comparator is further configured to control the selector switch to connect to the second branch when it has been detected that the level on the interface is higher than the reference level.

11. The SD card according to any one of claims 3 to 6, wherein
the switch controller comprises a counter and a digital signal processor;
an input end of the counter is coupled to the SDIO interface, an output end of the counter is coupled to the digital signal processor, and the counter is configured to count signals transmitted on the SDIO interface; and
the digital signal processor is coupled to the control input end, and is configured to read a count value output by the counter and control the selector switch to connect to the first branch when the count value is increasing.

12. The SD card according to claim 11, wherein the digital signal processor is further configured to control the selector switch to connect to the second branch when the count value is not increasing.
